# EUROPÄISCHE PATENTSCHRIFT

(11) **EP 2 333 632 B1**
(45) Veröffentlichungstag und Bekanntmachung des Hinweises auf die Patenterteilung: **01.08.2012**
(21) Anmeldenummer: 09178171.6
(22) Anmeldetag: 07.12.2009
(51) Int. Cl.: G05D 16/06

(54) **Gasentnahmearmatur für Druckgasquellen**
Gas removal fitting for pressurised gas sources
Armature d'extraction de gaz pour source de gaz sous pression

(43) Veröffentlichungstag der Anmeldung: 15.06.2011
(73) Patentinhaber: GCE GmbH, 36043 Fulda (DE)
(72) Erfinder: Heiß, Nicolai, 69436 Schönbrunn-Haag (DE); Hase, Manfred, 67240 Bobenheim-Roxheim (DE)
(74) Vertreter: Ascherl, Andreas

(56) Entgegenhaltungen:
- EP-A1- 1 103 878
- GB-A- 2 173 573
- US-A1- 2003 051 755

## Beschreibung

Die Erfindung betrifft einen Druckminderer zur Gasentnahme für Druckgasquellen. Insbesondere betrifft die Erfindung einen Druckminderer zur Gasentnahme für Gase höchster Reinheit.

Druckminderer zur Gasentnahme für Druckgasquellen sind in verschiedenen Ausführungsformen bereits aus dem Stand der Technik hinreichend bekannt. Als Druckgasquellen kommen beispielsweise Druckgasbehälter, Druckgasflaschen, Druckdosen und insbesondere Druckgasleitungen in Betracht. Die Druckgasquelle liefert Gase oder Gasgemische, wie z.B. technische Gase oder Reinstgase, wie Stickstoff, Sauerstoff, Wasserstoff, synthetische Luft, Kohlendioxid, Ammoniak, Edelgase, wie Helium, Argon, Krypton oder Xenon, oder Gasgemische, hier insbesondere Prüfgasgemische.

Aus US 2003/0051755A1 ist eine Druckminderungsanlage bekannt. Bei der bekannten Anlage ist eine Absperrvorrichtung in der Zuführleitung zu dem eigentlichen Druckminderer vorgesehen. Bei der bekannten Druckminderungsanlage ist eine kompakte Bauart nicht möglich. Diese bekannte Druckminderungsanlage, bestehend aus einem Druckminderer und einem Absperrventil, ist nicht in einer Umgebung unterzubringen, wo lediglich ein geringes Platzangebot zur Unterbringung bereitsteht, wie beispielsweise im Bereich der Medizintechnik.

Der Erfindung liegt daher die Aufgabe zugrunde, einen Druckminderer bereitzustellen, der zum einen die Handhabung der Vorrichtung bei der Gasentnahme erleichtert, der sicher anzuwenden und zu nutzen ist, und zum anderen durch seine kompakte Bauart eines geringen Platzangebots bedarf, wobei die Wahrscheinlichkeit, dass Verschmutzungen, die in das Reinstgas gelangen, erheblich reduziert wird.

Die Lösung der Aufgabe gelingt mit einem Druckminderer gemäß Anspruch 1. Weitere Ausführungsformen sind in den Unteransprüchen 2 - 9 wiedergegeben.

Die Erfindung betrifft demnach einen Druckminderer zur Gasentnahme aufweisend einen Grundkörper, der mindestens zwei Anschlussstutzen aufweist, und eine Druckregeleinrichtung zur Regelung des Gases durch den Druckminderer, wobei mittels eines Reglereinsatzes ein Druckstift zur Druckregulierung einstellbar ist. Ein Absperrelement ist in den Druckminderer derart integriert, dass mittels einer Absperreinrichtung der Gasfluss unterbrechbar ist. Der Druckstift und der Regelschieber sind neben einer Feder für den Regelschieber und einem Federzentrierring Bestandteile eines Reglereinsatzes, der in den Gehäusegrundkörper integrierbar ist. Bei der Druckregeleinrichtung handelt es sich um ein Handrad für die Druckregelung. Bei der Absperreinrichtung handelt es sich um ein Handrad für die Absperrfunktion des Druckminderers.

Bevorzugterweise ist die Zugstange mit dem Federtopf mittels eines Zylinderstifts verbunden. Bei dem Zylinderstift handelt es sich beispielsweise um einen Sicherheitsstift, der den Federtopf mit der Zugstange fest verbindet.

Bevorzugterweise ist die Zugstange derart anhebbar ist, dass eine mit einem über den Federtopf verbindbare Druckfeder stauchbar ist. Die Druckfeder ist an ihrem einen Ende vom Federtopf für die Absperrfunktion und an ihrem anderen Ende von einem Federdruckstück begrenzt.

Gemäß einer weiteren vorteilhaften Weiterbildung entspricht die Drehung der Absperreinrichtung zum Absperren des Druckminderers einer Drehung von höchstens 90 Grad. Die Drehung um 90 Grad bewirkt eine Unterbrechung des Gasflusses. Eine entsprechende Gegendrehung um 90 Grad zurück in die Ausgangsposition lässt den Gasfluss durch den Druckminderer wieder zu.

Gemäß einer weiteren vorteilhaften Weiterbildung entspricht die Höhe der Anhebung des Federtopfes 0,1 mm bis 0,5 mm.

Besonders bevorzugt entspricht die Höhe der Anhebung des Federtopfes 0,2 mm.

Die Erfindung betrifft ferner ein Verfahren zur Gasentnahme, wobei das Verfahren die folgenden Schritte zur Unterbrechung des Gasflusses im Druckminderer umfasst: Drehung der Absperreinrichtung, Drehung einer Verbindungsschraube, die über eine Schraube mit der Verstelleinrichtung (Absperreinrichtung) verbunden ist, Anheben einer Zugstange mittels einer Spindel, die die Verbindungsschraube mit der Zugstange verbindet, Anheben eines Federtopfs, der über einen Zylinderstift mit der Zugstange verbunden ist, und Absperren eines Reglereinsatzes durch Freigabe eines Druckstifts.

Das Absperrelement wird mittels einer Absperreinrichtung bedient. Durch eine Drehung der Absperreinrichtung in die entsprechende Richtung wird der Federtopf von einer Membran, die zwischen Federtopf und Druckstift angeordnet ist, angehoben oder wieder aufgesetzt. Durch die Anhebung des Federtopfes weg von der Membran erfährt diese keine Auslenkung mehr und der darunterliegende Druckstift und ein Regelschieber mit Dichtungswerkstoff werden durch die Federkraft der Regelschieberfeder und durch den herrschenden Gasdruck in einen Dichtungssitz gedrückt. Dadurch ist der Medienstrom sicher unterbrochen. Kein Gas strömt mehr durch den Druckminderer. Infolge eines erneuten Aufsetzens des Federtopfes auf die Membran wird die Unterbrechung des Medienstroms wieder aufgehoben.

Grundsätzlich kann jede im Rahmen der vorliegenden Anmeldung beschriebene bzw. angedeutete Variante der Erfindung besonders vorteilhaft sein, je nach wirtschaftlichen und technischen Bedingungen im Einzelfall. Soweit nichts gegenteiliges dargelegt ist, bzw. soweit grundsätzlich technisch realisierbar, sind einzelne Merkmale der beschriebenen Ausführungsformen austauschbar oder miteinander sowie mit per se aus dem Stand der Technik bekannten Merkmalen kombinierbar.

Die Erfindung wird nachfolgend in beispielhafter Weise anhand einer Zeichnung näher erläutert. Es wird ein bevorzugtes Ausführungsbeispiel beschrieben, auf welches die Erfindung jedoch nicht beschränkt ist.

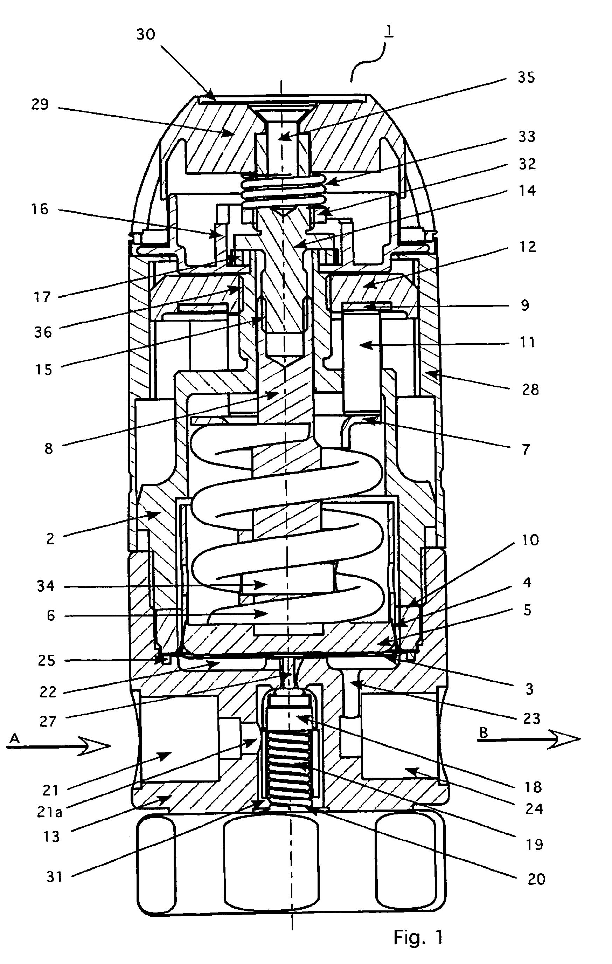

Fig. 1 zeigt schematisch einen Querschnitt des erfindungsgemäßen Druckminderers.

Der in Figur 1 gezeigte Druckminderer 1 weist an seinem distalen Ende eine Absperreinrichtung 29 und an seinem proximalen Ende einen Grundkörper 13 auf. Zwischen der Absperreinrichtung 29 und dem Grundkörper 13 ist eine Druckregeleinrichtung 28 angeordnet. Mittels der Absperreinrichtung 29 kann der Druckgasfluss durch den Druckminderer 1 unterbrochen werden. Um den Gasfluss zu unterbrechen ist im Folgenden die Absperreinrichtung um 90 Grad drehbar ausgeführt. Mittels Druckregeleinrichtung 28 kann ferner der gewünschte Gasdruck bei nicht abgesperrtem Druckminderer eingestellt werden.

Der Druckminderer 1 weist den Gehäusegrundkörper 13 auf, der im wesentlichen aus einem in der Draufsicht runden massiven Edelstahl- bzw. verchromten Messingblock besteht. In diesem ist eine zentrale Ausnehmung 31 vorgesehen, die zur Aufnahme eines Reglereinsatzes (Ventil) dient. Ein Anschlussstutzen 21 ist senkrecht zur Längsachse der Ausnehmung 31 angeordnet. Ein Radialkanal 21a schließt an den Anschlussstutzen 21 an. Der Radialkanal mündet im Mantel der Ausnehmung 31, etwa mittig. Die Ausnehmung 31 ist nach Art einer Sackbohrung ausgeführt. An ihrem oberen Ende geht sie in einen erweiterten Abschnitt 22 über. In diesem erweiterten Abschnitt 22 der Ausnehmung 31 mündet ein achsparalleler, exzentrisch angeordneter Gaskanal 23, der an einem weiteren Anschlussstutzen 24 anschließt.

Die Anschlussstutzen 21 und 24 sind dadurch hergestellt, dass von einem Rohling entsprechender Größe durch Drehen und Fräsen Material des Grundkörpers 13 abgetragen wurde. Die Anschlussstutzen 21 und 24 sind somit einstückig innerhalb des Gehäusegrundkörpers 13 angebracht und weisen ein Innengewinde (nicht dargestellt) auf. In die Ausnehmung 31 ist der Reglereinsatz eingepasst. Dieser besteht aus einem etwa zylindrischen Gehäuse. Der Reglereinsatz entspricht dem Regelschieber 18, der aus einem quadratischen Grundkörper besteht und dessen Ecken abgerundet sind, so dass der Regelschieber in die Bohrung 31 passt. In den Regelschieber 18 ist eine Dichtung eingebracht. Bei der Dichtung handelt es sich beispielsweise um eine O-Ring Dichtung mit einem O-Ring, der mit einer Schraubkappe gekammert wird oder um eine Flachdichtung, bei der die Dichtung eingebördelt wird. Der Reglereinsatz besteht aus einer Feder 19 für den Regelschieber, einem Federzentierring 20 und einem Druckstift 27 zusammen. In dem Bereich, in dem der Radialkanal 21 a in die Ausnehmung 31 mündet, ist der Durchmesser des Reglereinsatzgehäuses kleiner als die lichte Weite der Ausnehmung 31, so dass ein Spalt entsteht. An der gegenüberliegenden Seite weist der Reglereinsatz den Druckstift 27 auf. Aus dem Regelschieber 18 ragt der Druckstift 27 heraus. Der Regelschieber 18 ist mittels der Regelschieberfeder 19 in Richtung auf den Druckstift 27 vorgespannt, so dass der Druckstift 27 im vorgespannten Zustand den Regelschieber 18 verschließt.

Der Gehäusegrundkörper 13 ist an der offenen Seite der Ausnehmung 31 mit einer elastischen Membran 3 abgedeckt. Zur Herstellung einer dichten Verbindung dient eine Membrandichtung 25, in Form einer Flach-Dichtung. Die elastische Membran 3 wird auf den Gehäusegrundkörper 13 mittels Druckring 10 gepresst. Die Anpressung zwischen dem Druckring 10 und dem Gehäusegrundkörper 13 erfolgt über ein Oberteil 2.

Das Oberteil 2 ist mit dem Druckring 10 sowie mit dem Grundkörper 13 verbunden. Das Oberteil 2 ist in seiner Form an die Form des Gehäusegrundkörpers 13 angepasst und dient der Aussteifung der Vorrichtung und der Führung diverser Bauteile, wie beispielsweise einer Zugstange 8.

Auf der dem Reglereinsatz abgewandten Seite der Membran 3 ist ein Federtopf 5 angeordnet, der als Sitz für eine Druckfeder 6 dient. Die Druckfeder 6 ist in einem rohrförmigen Abschnitt des Oberteils 2 geführt. Der zweite Sitz der Druckfeder 6 ist ein Federdruckstück 7, das axial verschieblich ausgeführt ist. Auf der Stirnseite des Federdruckstücks 7 sind Zylinderstifte 11 vorgesehen. Das Oberteil 2 weist entsprechende Aussparungen für die Zylinderstifte 11 auf. Die Zylinderstifte sind oben von einer Lagerscheibe 9, die oberhalb der Zylinderstifte 11 angeordnet ist, begrenzt. Ein Stellrad 12, das eine ringförmige Aussparung an seiner Unterseite aufweist, nimmt die Lagerscheibe 9 auf. Das Stellrad 12 ist wiederum mit dem Handrad 28 für die Druckreglung verbunden. Das Stellrad 12 ist über das Handrad 28 zu drehen. Das Stellrad 12 ist mit dem Oberteil 2 über ein Gewinde 36 verbunden. Das Gewinde 36 ist ein rechtssteigendes Gewinde. Beim rechtssteigenden Gewinde steigen bei Aufsicht auf das Gewinde die Gewindeflanken nach rechts an. Die sich einstellende Höhendifferenz des Stellrads 12 infolge Drehung am Handrad 28 entspricht der Begrenzung des axialen Verschiebungsweges des Federdruckstücks 7.

Der in Figur 1 gezeigte Druckminderer 1 weist die Absperreinrichtung 29 auf. Die für die Absperrfunktion wichtigsten Komponenten werden unter dem Begriff Absperrelement zusammengefasst. Zum Absperrelement zählen unter anderem eine Verbindungsschraube 14, eine Druckfeder 33, die Zugstange 8 und der Federtopf 5. Das Handrad für die Absperrfunktion 29 ist mittels Wellen-Nabenverbindung (Kerbverzahnung) und einer Schraube 35 mit der Verbindungsschraube 14 fest verbunden. Infolge einer Verdrehung des Handrads 29 dreht sich die Verbindungsschraube 14 dementsprechend mit. Die Druckfeder 33 dient dazu, den Anschlagschieber 32 auf einen Anzeigering 16 mit entsprechenden Anschlagpunkten zu drücken um dadurch einen 90° Anschlag infolge einer Verdrehung der Absperreinrichtung zu gewährleisten. Dabei ist ein Klick-Geräusch hörbar, welches akkustisch signalisiert, dass der Anschlagpunkt erreicht ist, an dem die Absperreinrichtung einrastet. Der Anschlagschieber 32 sorgt nach erfolgter Drehung für das Anschlagen der Verbindungsschraube 14, beispielsweise bei einer Drehung um 90 Grad. Mittels der Spindel 15 ist die Verbindungsschraube 14 mit der Zugstange 8 verbunden. Die Spindel 15 sorgt bei einer Drehung der Verbindungsschraube 14 für ein Anheben der Zugstange 8. Die Zugstange 8 ist wiederum mittels des Zylinderstifts 34 mit dem Federtopf 5 verbunden. Bei dem Zylinderstift 34 handelt es sich um einen Sicherheitsstift, der die Zugstange 8 mit dem Federtopf 5 fest verbindet.

Das Oberteil 2 erfüllt mehrere Funktionen für den Absperrvorgang. Unter anderem dient es der axialen Führung der Zugstange 8, der axialen Führung des Federdruckstücks 7 als auch als Auflager für die drehbar gelagerte Verbindungsschraube 14.

Die Anzeige des Betriebszustandes, d.h. ob die Absperreinrichtung den Gasfluss durch den Druckminderer zulässt oder nicht, erfolgt durch eine eindeutige farbliche Kennzeichnung mittels Anzeigering 16. Durch Aussparungen an der Absperreinrichtung 29 wird die farbige Kennzeichnung am Anzeigering 16 sichtbar. Der Anzeigering 16 ist mit einem Anschlag (nicht dargestellt) für eine 90 Grad Drehung der Absperreinrichtung 29 ausgelegt. Die Farbe rot bezeichnet den abgesperrten Zustand, die Farbe grün den nicht abgesperrten - also den offenen - Zustand des Druckminderers 1. Ferner sind noch Richtungspfeile an der Absperreinrichtung 29 angebracht, die die Offen- und Geschlossenposition der Absperreinrichtung 29 zusätzlich veranschaulichen.

Am Handrad 29 befindet sich auf der Stirnseite eine kreisrunde flächige Vertiefung. In diese Vertiefung ist ein Gasart-Label 30 platziert.

Der Druckminderer arbeitet wie folgt: Über den in den Grundkörper 13 integrierten Anschlussstutzen 21 strömt Hochdruckgas (Pfeil A) in den zwischen dem Reglereinsatzgehäuse und der Wandung der Ausnehmung 31 gebildeten Ringraum (nicht dargestellt). Das Gas strömt vom Ringraum weiter in den Innenraum des Reglereinsatzgehäuses. Durch die Kraft der Druckfeder 6 wird die Membran 3 in Richtung auf den Regelschieber 18 gedrückt und stützt sich an dessen stiftförmigen Ansatzteil ab. Hierdurch wird der Regelschieber 18 aus seiner ursprünglichen Position entfernt und gibt den Ringspalt (nicht dargestellt) frei. Das in den Innenraum des Reglereinsatzes eingeströmte Gas strömt über diesen Ringspalt in den erweiterten Abschnitt 22 der Ausnehmung 31. Je nachdem, welche Gasmenge über den exzentrischen Gaskanal 23 hin zum Anschlussstutzen 24 abgeleitet wird, baut sich in dem durch die Membran 3 und den erweiterten Abschnitt 22 gebildeten Raum ein Druck auf, der die Membran 3 entgegen der Wirkung der Druckfeder 6 in Richtung von dem Druckstift 27 wegdrückt.

Infolgedessen wird der Regelschieber 18 durch die Wirkung der Regelschieberfeder 19 in Richtung auf den Druckstift 27 gedrückt und der Ringspalt zwischen dem Regelschieber 18 und dem Druckstift 27 wird verkleinert oder gar geschlossen. Auf diese Weise wird die Gaszufuhr in den aus dem erweiterten Abschnitt 22 und dem Kanal 23 und im Bereich des Anschlussstsutzen 24 gebildeten Niederdruckteil verringert. Es stellt sich in dem Niederdruckteil somit ein konstanter Druck ein, der in weiten Grenzen unabhängig von der Menge des über den Anschlussstutzen 24 entnommenen Gases (Pfeil B) ist. Die Größe des Druckes ist vielmehr nur abhängig vom Verhältnis der auf die Membran 3 einwirkenden entgegengesetzt gerichteten Kräfte.

Im nachfolgenden wird die Absperrfunktion und die Druckregelfunktion des Druckminderes näher erläutert.

Die Absperrung des Druckminderes läuft ab, wie folgt: Durch eine Rechtsdrehung (Drehung im Uhrzeigersinn) um 90 Grad am Handrad 29 für die Absperrfunktion des Druckminderers 1 wird die Verbindungsschraube 14, die über die Schraube 35 mit der Verstelleinrichtung 29 verbunden ist, ebenfalls um 90 Grad im Uhrzeigersinn verdreht. Die Druckfeder 33 erzeugt einen Anpressdruck auf den Anschlagschieber 32. Der Anschlagschieber 32 sorgt für ein Anschlagen der Verbindungsschraube 14 nach erfolgter 90 Grad Drehung.

Infolge der Drehung der Verbindungsschraube 14 wird gleichzeitig die Zugstange 8 in Richtung Verstelleinrichtung angehoben. Das Anheben der Zugstange 8 erfolgt mittels einer Spindel 15, die die Verbindungsschraube 14 mit der Zugstange 8 verbindet. Die Spindel 15 ist so ausgebildet, dass infolge der 90 Grad Drehung der Verbindungsschraube 14 die Zugstange 8 um 0,2 mm angehoben wird.

Die Zugstange 8 ist mittels des Zylinderstifts 34 mit dem Federtopf 5 verbunden. Bei dem Zylinderstift 34 handelt es sich um einen Sicherheitsstift, der die Zugstange 8 mit dem Federtopf 5 fest verbindet. Infolge des Anhebens der Zugstange 8 wird der Federtopf 5 gleichzeitig mit angehoben. Durch das Anheben des Federtopfs 5 kommt es schließlich zur Freigabe des Druckstifts 27. Dabei wird der Federtopf 5 von der Membran 3 und vom Druckstift 27 abgehoben. Infolge der Druckkraft der Regelschieberfeder 19 wird der Regelschieber 18 des Reglereinsatzes und somit der Druckstift 27 nach oben gedrückt. Der Gasfluss durch den Druckminderer ist damit unterbrochen.

Erst nach erfolgter Drehung am Handrad für die Absperrfunktion 29 entgegen dem Uhrzeigersinn um 90 Grad in die Ausgangsposition wird die Unterbrechung des Gasflusses durch den Druckminderer 1 wieder aufgehoben. Infolge der Linksdrehung der Absperreinrichtung 29 wird die Verbindungsschraube 14, die über eine Schraube 35 mit der Absperreinrichtung 29 verbunden ist, nach links um 90 Grad zurück in ihre Ausgangsposition gedreht. Die Drehung bewirkt ein Absenken der Zugstange 8, die mittels der Spindel 15, die Verbindungsschraube 14 mit der Zugstange 8 verbindet. Der mittels des Zylinderstifts 34 mit der Zugstange 8 verbundene Federtopf 5 erfährt ebenfalls eine Absenkung, so dass die Absperrfunktion des Regelschiebers 18 des Reglereinsatzes durch Freigabe des Druckstifts 27 aufgehoben ist.

Wie bereits oben erwähnt, ist der Gasfluss durch den Druckminderer mittels 90 Grad Drehung der Absperreinrichtung unabhängig von der Einstellung der Druckregeleinrichtung unterbrechbar. Die Erfindung erlaubt es, dass sich der Gasdruck, der vor der Absperrung mittels Druckregeleinrichtung eingestellt wurde, auch nach der Aufhebung der Absperrung, im Druckminderer wieder herrscht. Ein erneutes Einstellen des Druckminderers ist somit nicht erforderlich.

Die Druckregelung des Druckminderes läuft ab, wie nachfolgend erläutert: Bei einer Rechtsdrehung am Handrad 28, also einer Drehung im Uhrzeigersinn, steigt der Ausgangsdruck (Pfeil B) an, Bei einer Linksdrehung am Handrad 28, also einer Drehung gegen den Uhrzeigersinn, fällt der Ausgangsdruck wieder ab (Pfeil B),

Durch Linkssdrehung (Drehung entgegen dem Uhrzeigersinn) am Handrad 28 für die Druckregelung wird das Stellrad für die Druckeinstellung 12, das mit dem Handrad 28 verbunden ist, mit gedreht. Infolge der Drehung des Stellrads 12 werden Zylinderstifte 11 (in Figur 1 sind aus Übersichtsgründen lediglich zwei dargestellt) angehoben. Durch Drehung am Stellrad 12, das mit der inneren Rahmenkonstruktion 2 über ein Gewinde 36 verbunden ist, wird eine Anhebung der Zylinderstifte 11 ermöglicht. Infolge des Anhebens der Zylinderstifte 11 wird das Federdruckstück 7 entsprechend mit angehoben. Das Federdruckstück 7 wird von der Membran 3 weg bewegt. Die auf die Membran 3 einwirkende Federkraft der Druckfeder 6 wird somit verringert. Dies hat zur Folge, dass zur Erzielung des Kräftegleichgewichtes in dem erweiterten Abschnitt 22 ebenfalls ein verringerter Druck herrschen muss.

Solange dort dieser Druck nicht erreicht ist, wird durch die Kraft der Druckfeder 6 die Membran 3 in Richtung auf den Druckstift 27 gedrückt und dieser geöffnet, so dass Hochdruckgas solange nachströmen kann, bis das Kräftegleichgewicht erzielt und der Druckstift 27 soweit verschlossen ist, dass die zuströmende Gasmenge gleich der abgezogenen Menge ist und sich auf diese Weise ein konstanter Druck einstellt.

Durch eine Rechtsdrehung (Drehung im Uhrzeigersinn) am Handrad für die Druckregelung 28 wird das Stellrad 12 mit gedreht. Durch die Drehung am Stellrad 12, das mit der inneren Rahmenkonstruktion 2 über das Gewinde 36 verbunden ist, wird ein Absenken der Zylinderstifte 11 ermöglicht. Infolge des Absenkens der Zylinderstifte 11 wird das Federdruckstück 7 entsprechend abgesenkt. Dadurch wird das Federdruckstück 7 in Richtung auf die Membran 3 zu bewegt. Die auf die Membran 3 einwirkende Federkraft der Druckfeder 6 wird somit erhöht. Dies hat zur Folge, dass zur Erzielung des Kräftegleichgewichtes in dem erweiterten Abschnitt 22 ebenfalls ein erhöhter Druck herrschen muss.

Solange dort dieser erhöhte Druck nicht erreicht ist, wird durch die Kraft der Druckfeder 6 die Membran 3 in Richtung auf den Druckstift 27 gedrückt und dieser geöffnet, so dass Hochdruckgas solange nachströmen kann, bis das Kräftegleichgewicht erzielt und der Druckstift 27 soweit verschlossen ist, dass die zuströmende Gasmenge gleich der abgezogenen Menge ist und sich auf diese Weise ein konstanter Druck einstellt.

Wie bereits oben erwähnt, bewegt sich infolge einer Rechtsdrehung am Handrad 28 für die Druckregelung das Federdruckstück 7 in Richtung auf die Membran 3 zu. Dadurch wird die Druckfeder 6 gestaucht. Die Druckkraft der Druckfeder 6 wird dabei auf den Federtopf 5 übertragen. Infolge der Druckkraft der Druckfeder 6 bewegt sich der Federtopf 5 in Richtung auf die Membran 3 zu, was ein Absenken des Druckstifts 27 bewirkt. Der Federtopf 5 besteht vorzugsweise aus einem elastischen Material, wie beispielsweise aus Aluminium. Damit ist der Federtopf bei Krafteinwirkung elastisch durchbiegbar.

Bei entsprechender Linksdrehung am Handrad 28 für die Druckregelung bewegt sich der Federtopf 5 wieder von der Membran 3 weg, so dass dadurch eine Anhebung des Druckstifts 27 ausgelöst wird.

### Stückliste:

- 1: Druckminderer
- 2: Oberteil
- 3: Membran
- 4: Dämpfungsring
- 5: Federtopf
- 6: Druckfeder
- 7: Federdruckstück
- 8: Zugstange für Absperrfunktion
- 9: Lagerscheibe
- 10: Druckring
- 11: Zylinderstift
- 12: Stellrad für Druckeinstellung
- 13: Grundkörper
- 14: Verbindungsschraube
- 15: Spindel für Absperrfunktion
- 16: Anzeigering mit 90° Anschlag und Farbkennzeichnung rot/grün für Ventilposition
- 17: Haltemutter
- 18: Regelschieber mit O-Ring Dichtung
- 19: Regelschieberfeder
- 20: Federzentrierring
- 21: Anschlussstutzen
- 21a: Radialkanal
- 22: erweiterter Abschnitt
- 23: Gaskanal
- 24: Anschlussstutzen
- 25: Membrandichtung
- 27: Druckstift
- 28: Handrad für Druckregelung
- 29: Handrad für Absperrfunktion
- 30: Gasart Label
- 31: Ausnehmung für Reglereinsatzgehäuse
- 32: Anschlagschieber für 90° Anschlag
- 33: Druckfeder für 90° Anschlag
- 34: Zylinderstift
- 35: Schraube
- 36: Gewinde

- A: Flussrichtung des einströmenden Gases
- B: Flussrichtung des ausströmenden Gases

## Patentansprüche

1. Druckminderer (1) zur Gasentnahme aufweisend
- einen Grundkörper (13), der mindestens zwei Anschlussstutzen (21, 24) aufweist, und
- eine Druckregeleinrichtung (28) zur Regelung des Gasdruckes mittels eines Reglereinsatzes (18, 19) und eines Druckstifts (27),
**dadurch gekennzeichnet, dass**
ein Absperrelement, das eine Verbindungsschraube (14), eine Druckfeder (33), eine Zugstange (8) und einen Federtopf (5) aufweist, in den Druckminderer (1) derart integriert ist, dass der Gasfluss mittels des Druckstifts (27) über eine Absperreinrichtung (29) unabhängig von der Einstellung der Druckregeleinrichtung (28) unterbrechbar ist,
wobei die Absperreinrichtung (29) am distalen Ende des Druckminderers (1), der Grundkörper (13) am proximalen Ende des Druckminderers (1) und die Druckregeleinrichtung (28) zwischen der Absperreinrichtung (29) und dem Grundkörper (13) angeordnet sind und die Zugstange (8) an ihrem distalen Ende mit der Verbindungsschraube (14) und an ihrem proximalen Ende_mit dem Federtopf (5) verbunden ist.

2. Druckminderer (1) zur Gasentnahme gemäß Anspruch 1, wobei die Verbindungsschraube (14) drehbar ist.

3. Druckminderer (1) zur Gasentnahme gemäß Anspruch 2, wobei ein Anschlagschieber (32), der eine Drehung der Absperreinrichtung (29) begrenzt, mittels der Druckfeder (33) auf einen Anzeigering (16) anpressbar ist.

4. Druckminderer (1) zur Gasentnahme gemäß Anspruch 1, wobei die Verbindungsschraube (14) mit der Zugstange (8) mittels einer Spindel (15) verbindbar ist.

5. Druckminderer (1) zur Gasentnahme gemäß Anspruch 1, wobei die Zugstange (8) mit dem Federtopf (5) mittels eines Zylinderstifts (34) verbunden ist.

6. Druckminderer (1) zur Gasentnahme gemäß Anspruch 1, wobei die Zugstange (8) derart anhebbar ist, dass eine mit einem über den Federtopf (5) verbindbare Druckfeder (6) stauchbar ist.

7. Druckminderer (1) zur Gasentnahme gemäß einem der vorherigen Ansprüche, wobei die Drehung der Absperreinrichtung (29) zum Absperren des Druckminderers (1) einer Drehung von höchstens 90 Grad entspricht.

8. Druckminderer (1) zur Gasentnahme gemäß einem der vorherigen Ansprüche, wobei die Höhe der Anhebung des Federtopfes (5) 0,1 mm bis 0,5 mm entspricht.

9. Druckminderer (1) zur Gasentnahme gemäß einem der vorherigen Ansprüche, wobei die Höhe der Anhebung des Federtopfes (5) 0,2 mm entspricht.

## Claims

1. Pressure reducer (1) for removing gas, comprising
- a base body (13), which has at least two connecting pieces (21, 24), and
- a pressure control device (28) for controlling the gas pressure by means of a controller insert (18, 19) and a pressure pin (27),
**characterised in that**
a blocking element having a connecting screw (14), a compression spring (33), a connecting rod (8) and a spring cap (5) is integrated in the pressure reducer (1) in such a way that the gas flow can be interrupted by means of the pressure pin (27) by a blocking device (29) independently of the adjustment of the pressure control device (28),
wherein the blocking element (29) is arranged at the distal end of the pressure reducer (1), the base body (13) is arranged at the proximal end of the pressure reducer (1) and the pressure control device (28) is arranged between the blocking device (29) and the base body (13) and the connecting rod (8) is connected at its distal end to the connecting screw (14) and at its proximal end to the spring cap (5).

2. Pressure reducer (1) for removing gas according to claim 1, wherein the connecting screw (14) is rotatable.

3. Pressure reducer (1) for removing gas according to claim 2, wherein a stop slide (32) limiting a rotation of the blocking device (29) can be pressed onto a display ring (16) by means of the compression spring (33).

4. Pressure reducer (1) for removing gas according to claim 1, wherein the connecting screw (14) can be connected to the connecting rod (8) by means of a spindle (15).

5. Pressure reducer (1) for removing gas according to claim 1, wherein the connecting rod (8) is connected to the spring cap (5) by means of a cylindrical pin (34).

6. Pressure reducer (1) for removing gas according to claim 1, wherein the connecting rod (8) can be lifted in such a way that a compression spring (6), which can be connected to a ... by means of the spring cap (5), can be compressed.

7. Pressure reducer (1) for removing gas according to any one of the preceding claims, wherein the rotation of the blocking device (29) to block the pressure reducer (1) corresponds to a rotation of at most 90 degrees.

8. Pressure reducer (1) for removing gas according to any one of the preceding claims, wherein the extent of the lift of the spring cap (5) corresponds to 0.1 mm to 0.5 mm.

9. Pressure reducer (1) for removing gas according to any one of the preceding claims, wherein the extent of the lift of the spring cap (5) corresponds to 0.2 mm.

## Revendications

1. Détendeur (1) destiné à extraire du gaz comprenant
- un corps de base (13) comprenant au moins deux tubulures de raccordement (21, 24), et
- un dispositif de régulation de pression (28) destiné à réguler la pression de gaz au moyen d'un bloc de réglage (18, 19) et d'un poussoir (27),
**caractérisé en ce qu'**un élément d'arrêt comprenant une vis de raccordement (14), un ressort de pression (33), une barre de traction (8) et un vase à ressort (5) est intégré dans le détendeur (1), de telle sorte que le flux de gaz puisse être interrompu au moyen du poussoir (27) par l'intermédiaire d'un dispositif d'arrêt (29) indépendamment du réglage du dispositif de régulation de pression (28),
le dispositif d'arrêt (29) étant disposé sur l'extrémité distale du détendeur (1), le corps de base (13) sur l'extrémité proximale du détendeur (1) et le dispositif de régulation de pression (28) entre le dispositif d'arrêt (29) et le corps de base (13) et la barre de traction (8) étant reliée par son extrémité distale à la vis de raccordement (14) et par son extrémité proximale au vase à ressort (5).

2. Détendeur (1) destiné à extraire du gaz selon la revendication 1, la vis de raccordement (14) étant rotative.

3. Détendeur (1) destiné à extraire du gaz selon la revendication 2, un coulisseau de butée (32) limitant une rotation du dispositif d'arrêt (29) pouvant être pressé au moyen du ressort de pression (33) sur une bague d'indication (16).

4. Détendeur (1) destiné à extraire du gaz selon la revendication 1, la vis de raccordement (14) pouvant être reliée à la barre de traction (8) au moyen d'une broche (15).

5. Détendeur (1) destiné à extraire du gaz selon la revendication 1, la barre de traction (8) étant reliée au vase à ressort (5) au moyen d'une goupille cylindrique (34).

6. Détendeur (1) destiné à extraire du gaz selon la revendication 1, la barre de traction (8) pouvant être levée de telle sorte qu'un ressort de pression (6) pouvant être relié par le vase à ressort (5) puisse être comprimé.

7. Détendeur (1) destiné à extraire du gaz selon l'une des revendications précédentes, la rotation du dispositif d'arrêt (29) destiné à arrêter le détendeur (1) correspondant à une rotation de 90° maximum.

8. Détendeur (1) destiné à extraire du gaz selon l'une des revendications précédentes, la hauteur de l'élévation du vase à ressort (5) correspondant à 0,1 mm à 0,5 mm.

9. Détendeur (1) destiné à extraire du gaz selon l'une des revendications précédentes, la hauteur de l'élévation du vase à ressort (5) correspondant à 0,2 mm.
